# EUROPEAN PATENT SPECIFICATION

(11) **EP 2 581 977 B1**
(45) Date of publication and mention of the grant of the patent: **18.03.2015**
(21) Application number: 12175618.3
(22) Date of filing: 09.07.2012
(51) Int. Cl.: H01M 10/052, H01M 10/0569, H01M 10/056, H01M 4/13, H01M 2/16

(54) **Rechargeable lithium battery**
Wiederaufladbare Lithiumbatterie
Batterie au lithium rechargeable

(30) Priority: 11.10.2011 US 201161545857 P; 28.06.2012 US 201213537042
(43) Date of publication of application: 17.04.2013
(73) Proprietor: Samsung SDI Co., Ltd., Yongin-si, Gyeonggi-do (KR)
(72) Inventor: Kim, Cheon-Soo, Gyeonggi-do (KR)
(74) Representative: Mounteney, Simon James

(56) References cited:
- EP-A1- 2 031 690
- WO-A1-02/061872
- US-A1- 2007 254 215

## Description

### BACKGROUND

### 1. Field

This disclosure relates to a rechargeable lithium battery.

### 2. Description of the Related Art

A lithium rechargeable battery has recently drawn attention as a power source for a small portable electronic device. It uses an organic electrolyte solution and thereby has twice the discharge voltage of a conventional battery using an alkali aqueous solution and as a result, has high energy density.

The rechargeable lithium battery includes an electrode assembly including a positive electrode, a negative electrode facing the positive electrode, a separator interposed between the positive and negative electrodes, and an electrolyte solution impregnating the positive electrode, the negative electrode, and the separator.

The electrolyte solution mainly includes a mixture of a lithium salt and a non-aqueous organic solvent. The non-aqueous organic solvent mainly includes a mixture of linear carbonate and cyclic carbonate.

However, a rechargeable lithium battery fabricated by impregnating a positive electrode, a negative electrode, and a separator in the electrolyte solution has a limit in improving a cycle-life.

### SUMMARY

One exemplary embodiment provides a rechargeable lithium battery with excellent cycle-life characteristic at overcharge.

According to one embodiment, a rechargeable lithium battery includes a positive electrode; a negative electrode; a separator that is coated on the surface with a polymer layer including a polyvinylidene fluoride based polymer interposed between the positive electrode and the negative electrode; and an electrolyte solution that comprises an alkyl propionate.

The polymer layer is disposed between the surface of the separator and the positive electrode and/or between the surface of the separator and the negative electrode.

The polyvinylidene fluoride based polymer includes a polymer selected from the group consisting of polyvinylidene fluoride, polyvinylidene fluoride-hexafluoropropylene copolymer, and a combination thereof.

The polyvinylidene fluoride based polymer is loaded at a loading level ranging from 0.5 to 3.0 g/m².

The polymer layer may further include a filler selected from the group consisting of organic powder, ceramic powder, and a combination thereof. The organic powder may include polymethylmethacrylate (PMMA), and the ceramic powder may include at least one selected from Al₂O₃, Mg(OH)₂, and a combination thereof.

The ceramic powder may be included in an amount of 0.1 to 98 wt% based on the total weight of the polymer layer.

The alkyl propionate is be a C1 to C10 alkyl propionate and may include one selected from methyl propionate, ethyl propionate, and a combination thereof.

The alkyl propionate is included in an amount of 10 to 70 volume% and specifically, 20 to 70 volume% based on the total weight of the electrolyte solution (e.g. 30 to 70% volume based on the total volume of the electrolyte solution).

The electrolyte solution can further include a lithium salt and a non-aqueous organic solvent other than an alkyl propionate and, optionally an overcharge-inhibiting additive.

Additional preferred features of the invention are set out in claims 2 to 15.

Hereinafter, further embodiments will be described in the detailed description.

Accordingly, the present invention provides a rechargeable lithium battery with excellent cycle-life characteristic at overcharge.

### BRIEF DESCRIPTION OF THE DRAWINGS

FIG. 1 is a schematic view of a rechargeable lithium battery according to one embodiment.
FIGS. 2 to 8 are graphs respectively showing the state of rechargeable lithium batteries according to Examples 1 to 6 and Comparative Example 1 at overcharge.

### DETAILED DESCRIPTION

Embodiments of this disclosure will hereinafter be described in detail.

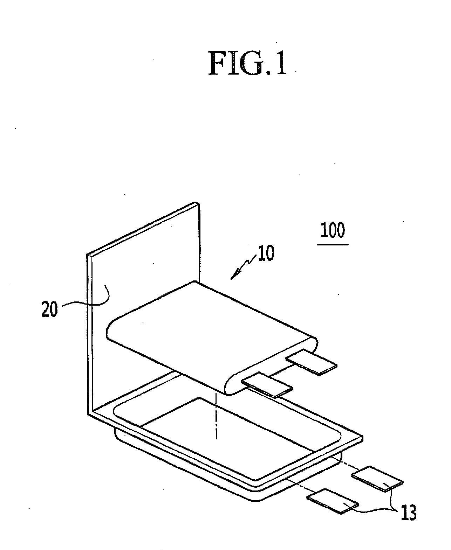

A rechargeable lithium battery according to one embodiment is illustrated referring to FIG. 1.

FIG. 1 is the schematic view of a rechargeable lithium battery according to one embodiment.

Referring to FIG. 1, a rechargeable lithium battery 100 according to one embodiment includes an electrode assembly 10, a pouch case 20 containing the electrode assembly, and an electrode tab 13 electrically channeling a current generated from the electrode assembly to the outside. The pouch case 20 is sealed by overlapping the two sides facing each other.

The electrode assembly 10 includes a positive electrode, a negative electrode facing the positive electrode, a separator interposed between the positive electrode and the negative electrode, and an electrolyte solution impregnating the negative and positive electrodes and the separator.

According to one embodiment, a rechargeable lithium battery can be cylindrical, prismatic, coin-type, pouch-type, and the like but specifically, pouch-type as shown in FIG. 1.

The separator may be a single layer or a multi-layer, and made of for example glass fiber, polyester, teflon, polyethylene, polypropylene, polytetrafluoroethylene or a combination thereof.

The separator includes a polymer layer on the surface. In particular, the polymer layer may be disposed at least either between the surface of the separator and the surface of the positive electrode or between the surface of the separator and the surface of the negative electrode.

The polymer layer includes polyvinylidene fluoride based polymer. The polyvinylidene fluoride based polymer includes a polymer selected from the group consisting of polyvinylidene fluoride, polyvinylidene fluoride-hexafluoropropylene copolymer, and a combination thereof.

When the polymer layer including the polyvinylidene fluoride based polymer is formed on the surface of the separator, the separator may be well impregnated in an electrolyte solution and thus, improve cycle-life characteristic of a rechargeable lithium battery at overcharge and also, more adhered to a substrate and thus, increase strength of the rechargeable lithium battery and make the rechargeable lithium battery thinner.

The polyvinylidene fluoride based polymer can be loaded at a loading level ranging from 0.5 to 3.0 g/m² and specifically, from 1.5 to 2.5 g/m² (e.g. 2.0 to 2.4 g/m², such as 2.3 g/m²). The loading level indicates a polymer weight per unit area on the surface of a separator. When the polyvinylidene fluoride based polymer is loaded within the range, the separator may be well impregnated in an electrolyte solution, accomplishing a rechargeable lithium battery with excellent electric conductivity and also, more adhered to a binder in a substrate, fabricating a rechargeable lithium battery with excellent strength.

The polymer layer may be formed by mixing the polyvinylidene fluoride based polymer and a filler.

The filler includes one selected from organic powder, ceramic powder, and a combination thereof.

The organic powder includes polymethylmethacrylate (PMMA), and the ceramic powder includes one selected from Al₂O₃, Mg(OH)₂, and a combination thereof.

The ceramic powder is included in an amount of 0.1 to 98 wt% and specifically, 3 to 20 wt% based on the total weight of the polymer layer. When the ceramic powder is included within the range, static electricity is lowered, and friction is decreased, bringing about excellent process property.

The electrolyte solution includes an alkyl propionate.

When the alkyl propionate is included in an electrolyte solution, the polyvinylidene fluoride based polymer and the alkyl propionate forming the polymer layer on the surface of the separator has excellent compatibility and thus helps the separator and the negative and positive electrodes to be well impregnated in an electrolyte solution. Accordingly, the present invention may provide a rechargeable lithium battery with excellent cycle-life characteristic at overcharge.

The alkyl propionate includes an alkyl group having C1 to C10. The alkyl group may be selected from a C1 to C10 linear type, a C3 to C10 branched type, and a C3 to C10 cyclic type.

The alkyl propionate may be selected from methyl propionate, ethyl propionate, and a combination thereof. These materials have low viscosity and more excellent compatibility with the polyvinylidene fluoride based polymer, fabricating a rechargeable lithium battery with improved cycle-life characteristic at overcharge.

The alkyl propionate can be included in an amount of 10 to 70 volume%, specifically, 20 to 70 volume%, more specifically, 30 to 70 volume%, more specifically, 40 to 70 volume%, and most specifically 50 to 60 volume% based on the total weight of the electrolyte solution. When the alkyl propionate is included in an electrolyte solution within the range, the alkyl propionate may have more excellent compatibility with the polyvinylidene fluoride based polymer forming the polymer layer on the surface of a separator and thus, better impregnate the separator and the negative and positive electrodes. Accordingly, the present invention may realize a rechargeable lithium battery with excellent cycle-life characteristic at overcharge.

The electrolyte solution may include a lithium salt and a non-aqueous organic solvent other than the alkyl propionate.

The lithium salt dissolved in the non-aqueous organic solvent supplies lithium ions in the battery, and operates a basic operation of a rechargeable lithium battery and improves lithium ion transportation between positive and negative electrodes.

The lithium salt includes one selected from LiPF₆, LiBF₄, LiSbF₆, LiAsF₆, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (wherein x and y are natural numbers), LiCl, Lil, LiB(C₂O₄)₂ (lithium bis(oxalato) borate; LiBOB) and a combination thereof.

The lithium salt may be used at a concentration ranging from about 0.1 M to about 2.0 M. When the lithium salt is included at the above concentration range, an electrolyte solution may have excellent performance and lithium ion mobility due to appropriate conductivity and viscosity of an electrolyte solution.

The non-aqueous organic solvent serves as a medium for transmitting ions taking part in the electrochemical reaction of a battery. The non-aqueous organic solvent includes one selected from a carbonate-based solvent, an ester-based solvent, an ether-based solvent, a ketone-based solvent, an alcohol-based solvent, or an aprotic solvent, and a combination thereof.

The carbonate-based solvent includes, for example dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and the like.

When the carbonate-based solvent is prepared by mixing a cyclic carbonate and a linear carbonate, a solvent having a low viscosity while having an increased dielectric constant may be obtained. The cyclic carbonate and the linear carbonate are mixed together inat the volume ratio of about 1:1 to 1:9.

The ester-based solvent may include, for example methyl acetate, ethyl acetate, n-propyl acetate, methyl propionate, ethyl propionate, γ-butyrolactone, decanolide, valerolactone, mevalonolactone, caprolactone, or the like.

The ether-based solvent may include, for example dibutylether, tetraglyme, diglyme, dimethoxyethane, 2-methyltetrahydrofuran, tetrahydrofuran, and the like.

The ketone-based solvent may include cyclohexanone, and the like.

The alcohol-based solvent may include ethanol, isopropyl alcohol, and the like.

The non-aqueous organic solvent may be used singularly or in a mixture. When the organic solvent is used in a mixture, the mixture ratio can be controlled in accordance with a desirable battery performance.

The non-aqueous electrolyte solution may further include an overcharge-inhibiting additive such as ethylene carbonate, pyrocarbonate, and like.

The positive electrode may include a current collector and a positive active material layer on the current collector. The positive active material layer may include a positive active material, a binder, and optionally, a conductive material.

The current collector may be Al (aluminum), but is not limited thereto.

The positive active material includes a lithiated intercalation compound that reversibly intercalates and deintercalates lithium ions. The positive active material may include a composite oxide including at least one of cobalt, manganese, nickel, or combination thereof as well as lithium. In particular, the following lithium-containing compounds may be used:

LiₐA_{1-b}B_{b}D₂

(wherein, in the above formula, 0.90 ≤ a ≤ 1.8 and 0 ≤ b ≤ 0.5); LiₐE_{1-b}B_{b}O_{2-c}D_{c} (wherein, in the above formula, 0.90 ≤ a ≤ 1.8, 0 ≤ b ≤ 0.5, 0 ≤ c ≤ 0.05); LiE_{2-b}B_{b}O_{4-c}D_{c} (wherein, in the above formula, 0 ≤ b ≤ 0.5, and 0 ≤ c ≤ 0.05); LiₐNi_{1-b-c}Co_{b}B_{c}Dₐ (wherein, in the above formula, 0.90 ≤ a ≤ 1.8, 0 ≤ b ≤ 0.5, 0 ≤ c ≤ 0.05, and 0 < a ≤ 2); LiₐNi_{1-b-c}Co_{b}B_{c}O₂₋ₐFₐ (wherein, in the above formula, 0.90 ≤ a ≤ 1.8, 0 ≤ b ≤ 0.5, 0 ≤ c ≤ 0.05, and 0 < a < 2); LiₐNi_{1-b-c}Co_{b}B_{c}O₂₋ₐF₂ (wherein, in the above formula, 0.90 ≤ a ≤ 1.8, 0 ≤ b ≤ 0.5, 0 ≤ c ≤ 0.05, and 0 < α < 2); LiₐNi_{1-b-c}Mn_{b}B_{c}D_{α} (wherein, in the above formula, 0.90 ≤ a ≤ 1.8, 0 ≤ b ≤ 0.5, 0 ≤ c ≤ 0.05, and 0 < α ≤ 2); LiₐNi_{1-b-c}Mn_{b}B_{c}O_{2-α}F_{α} (wherein, in the above formula, 0.90 ≤ a ≤ 1.8, 0 ≤ b ≤ 0.5, 0 ≤ c ≤ 0.05, and 0 < α < 2); LiₐNi_{1-b-c}Mn_{b}B_{c}O_{2-α}F₂ (wherein, in the above formula, 0.90 ≤ a ≤ 1.8, 0 ≤ b ≤ 0.5, 0 ≤ c ≤ 0.05, and 0 < α < 2); LiₐNi_{b}E_{c}G_{d}O₂ (wherein, in the above formula, 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GeO₂ (wherein, in the above formula, 0.90 ≤ a ≤ 1.8, 0 ≤ b ≤ 0.9, 0 ≤ c ≤ 0.5, 0 ≤ d ≤ 0.5, and 0.001 ≤ e ≤ 0.1); LiₐNiG_{b}O₂ (wherein, in the above formula, 0.90 ≤ a ≤ 1.8, and 0.001 ≤ b ≤ 0.1); LiₐCoG_{b}O₂ (wherein, in the above formula, 0.90 ≤ a ≤ 1.8, and 0.001 ≤ b ≤ 0.1); LiₐMnG_{b}O₂ (wherein, in the above formula, 0.90 ≤ a ≤ 1.8, and 0.001 ≤ b ≤ 0.1); LiₐMn₂G_{b}O₄ (wherein, in the above formula, 0.90 ≤ a ≤ 1.8, and 0.001 ≤ b ≤ 0.1); QO₂; QS₂; LiQS₂; V₂O₅; LiV₂O₅; LilO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above formulas, A is Ni, Co, Mn, or a combination thereof; B is Al, Ni, Co, Mn, Cr, Fe, Mg, Sr, V, a rare earth element, or a combination thereof; D is O, F, S, P,, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known to those who work in the related field.

The binder improves binding properties of the positive active material particles to each other and to a current collector. Examples of the binder include polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Any electrically conductive material may be used as a conductive material unless it causes a chemical change. Examples of the conductive material include: one or more of natural graphite, artificial graphite, carbon black, acetylene black, ketjen black, a carbon fiber, copper, a metal powder or a metal fiber including nickel, aluminum, silver, and the like, and a polyphenylene derivative.

The negative electrode includes a negative current collector and a negative active material layer disposed thereon.

The negative current collector may be a copper foil.

The negative active material layer may include a negative active material, a binder, and optionally a conductive material.

The negative active material includes a material that reversibly intercalates/deintercalates lithium ions, a lithium metal, a lithium metal alloy, a material being capable of doping/dedoping lithium, or a transition metal oxide.

The material that can reversibly intercalate/deintercalate lithium ions includes a carbon material. The carbon material may be any generally-used carbon-based negative active material in a lithium ion rechargeable battery. Examples of the carbon material include crystalline carbon, amorphous carbon, and mixtures thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

Examples of the lithium metal alloy include lithium and a metal selected from Na, K, Rb, Cs, Fr, Be, Mg, Ca, Sr, Si, Sb, Pb, In, Zn, Ba, Ra, Ge, Al, and Sn.

The material being capable of doping/dedoping lithium may include Si, SiOₓ (0 < x < 2), a Si-C composite, a Si-Y alloy (wherein Y is selected from an alkali metal, an alkaline-earth metal, Group 13 to Group 16 elements, a transition element, a rare earth element, and a combination thereof, and not Si), Sn, SnO₂, a Sn-C composite, a Sn-Y alloy (wherein Y is selected from an alkali metal, an alkaline-earth metal, Group 13 to Group 16 elements, a transition element, a rare earth element, and a combination thereof, and not Sn), and the like. At least one of these materials may be mixed with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include vanadium oxide, lithium vanadium oxide, and the like.

The binder improves binding properties of negative active material particles with one another and with a current collector. Examples of the binder include polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to improve electrode conductivity. Any electrically conductive material may be used as a conductive material unless it causes a chemical change. Examples of the conductive material include carbon-based materials such as natural graphite, artificial graphite, carbon black, acetylene black, ketjen black, carbon fibers, and the like; metal-based materials of metal powder or metal fiber including copper, nickel, aluminum, silver; conductive polymers such as polyphenylene derivatives; or a mixture thereof.

The negative electrode and positive electrode may be respectively fabricated by a method including mixing an active material, a conductive material, and a binder into an active material composition and coating the composition on a current collector.

The electrode manufacturing method is well known, and thus is not described in detail in the present specification. The solvent can be N-methylpyrrolidone but it is not limited thereto.

Hereinafter, the embodiments are illustrated in more detail with reference to examples. However, the following are exemplary embodiments and are not limiting.

Furthermore, what is not described in this specification can be sufficiently understood by those who have knowledge in this field and will not be illustrated here.

### (Fabrication of Rechargeable lithium battery cell)

### Example 1

A positive active material layer composition was prepared by mixing LiCoO₂ a positive active material, polyvinylidene fluoride (PVDF) as a binder, and carbon as a conductive material at a weight ratio of 92:4:4 and dispersing the mixture in N-methyl-2-pyrrolidone. The positive active material layer composition was coated on a 12 µm-thick aluminum foil and compressed, fabricating a positive electrode.

On the other hand, a negative active material layer composition was prepared by mixing graphite as a negative active material, styrene-butadiene rubber (SBR) as a binder, and carboxylmethylcellulose (CMC) as a thickener at a weight ratio of 98:1:1 and dispersing the mixture in water. The negative active material layer composition was coated on a 8 µm-thick copper foil and then, dried and compressed, fabricating a negative electrode.

Then, an electrolyte solution was prepared by mixing ethylene carbonate (EC), propylene carbonate (PC), and ethyl propionate (EP) at a volume ratio of 3:1:6 and dissolving LiPF₆ at 1.3M concentration and 0.2 parts by weight of LiBF₄ (100 parts by weight of the mixed solution) therein.

The positive and negative electrodes and the electrolyte solution were used with a polyethylene separator to fabricate a laminate-type battery cell having capacity of 1400 mAh/g at 1C. The polyethylene separator was coated with polyvinylidene fluoride at a loading level of 2.3 g/m².

### Example 2

A half-cell was fabricated according to the same method as Example 1 except for using a mixed solution prepared by mixing ethylene carbonate (EC), ethylmethyl carbonate (EMC), and ethyl propionate (EP) at a volume ratio of 3:1:6 to prepare an electrolyte solution.

### Example 3

A half-cell was fabricated according to the same method as Example 1 except for using a mixed solution prepared by mixing ethylene carbonate (EC), diethyl carbonate (DEC), and ethyl propionate (EP) at a volume ratio of 3:1:6 to prepare an electrolyte solution.

### Example 4

A half-cell was fabricated according to the same method as Example 1 except for using a mixed solution prepared by mixing ethylene carbonate (EC), propylene carbonate (PC), ethylmethyl carbonate (EMC), and ethyl propionate (EP) at a volume ratio of 3:1:1:5 to prepare an electrolyte solution.

### Example 5

A half-cell was fabricated according to the same method as Example 1 except for using a mixed solution prepared by mixing ethylene carbonate (EC), ethylmethyl carbonate (EMC), diethylcarbonate (DEC), and ethyl propionate (EP) at a volume ratio of 3:1:1:5 to prepare an electrolyte solution.

### Example 6

A half-cell was fabricated according to the same method as Example 1 except for using a mixed solution prepared by mixing ethylene carbonate (EC), propylene carbonate (PC), diethylcarbonate (DEC), and ethyl propionate (EP) at a volume ratio of 3:1:1:5 to prepare an electrolyte solution.

### Comparative Example 1

A half-cell was fabricated according to the same method as Example 1 except for using an electrolyte solution prepared by using a mixed solution including ethylene carbonate (EC), ethylmethyl carbonate (EMC), and diethylcarbonate (DEC) at a volume ratio of 3:5:2 and dissolving LiPF₆ with 1.15M concentration and 0.2 parts by weight of LiBF₄ based on 100 parts by weight of the mixed solution.

### Comparative Example 2

A half-cell was fabricated according to the same method as Example 1 except for using the polyethylene separator not coated with polyvinylidene fluoride.

### Evaluation 1: Rechargeable lithium battery cell at overcharge

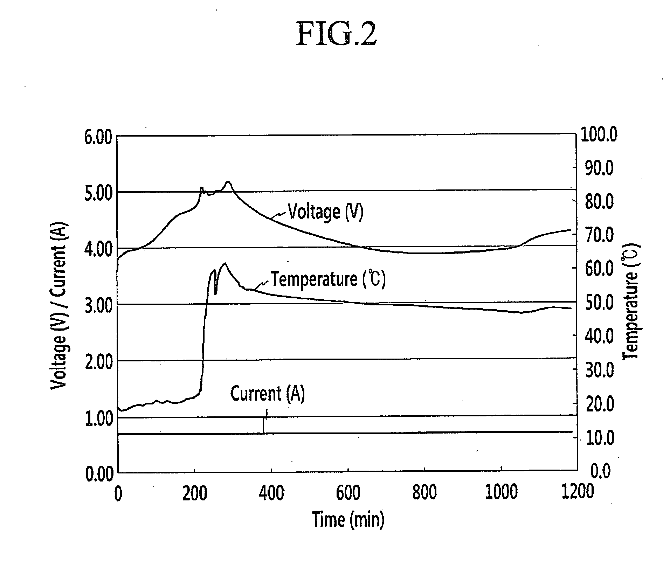

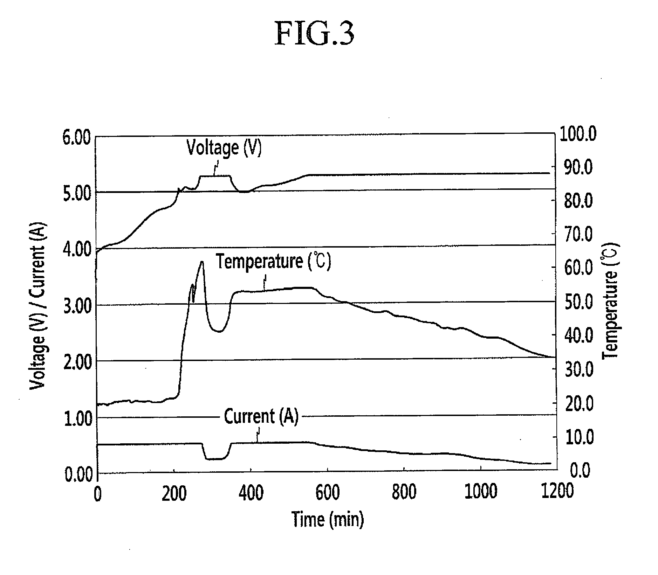

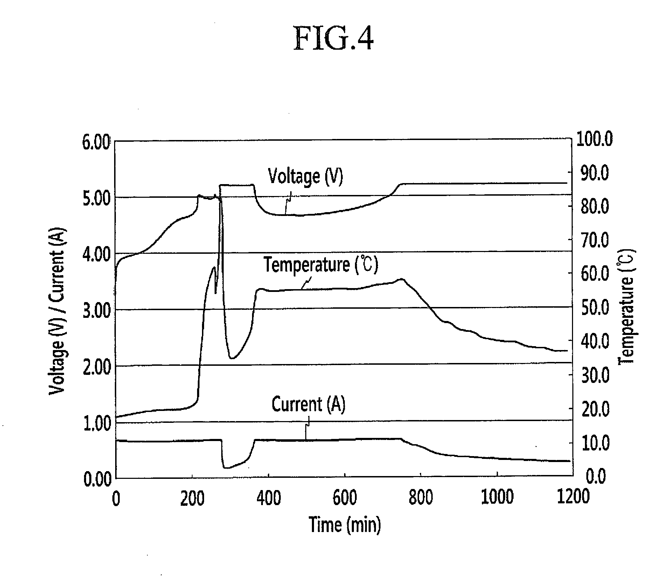

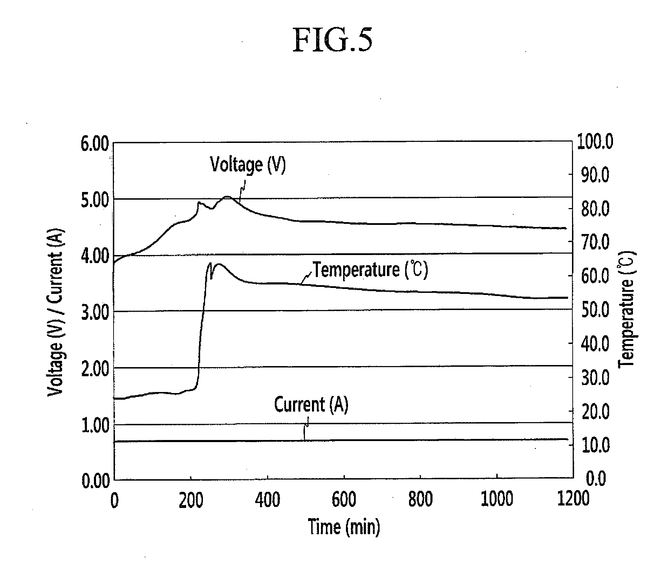

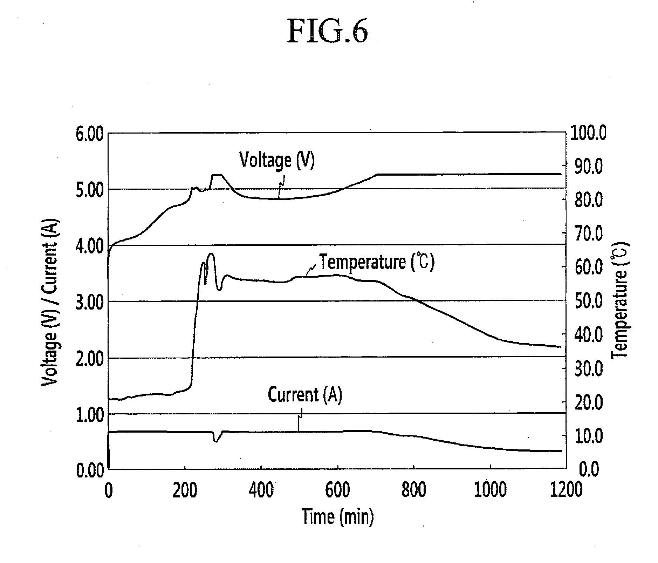

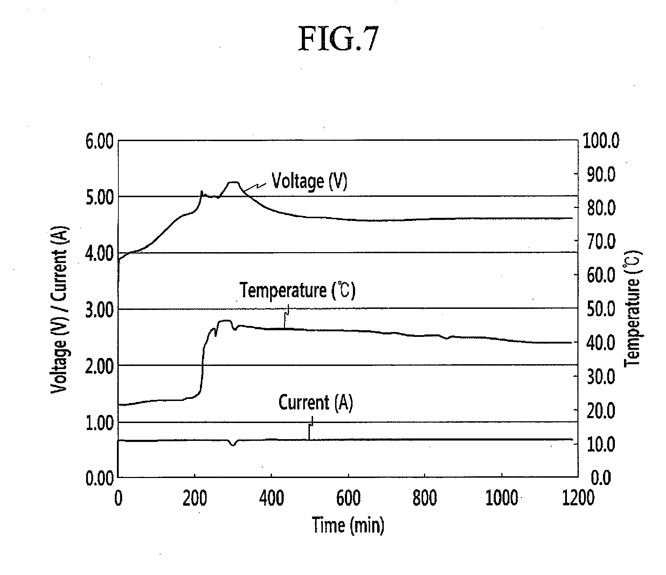

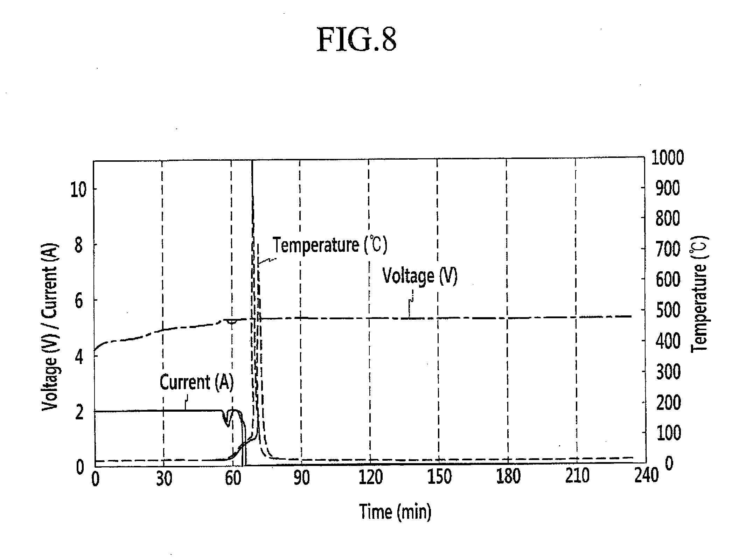

Each rechargeable lithium battery cell according to Examples 1 to 6 and Comparative Examples 1 and 2 were overcharged and measured regarding voltage and temperature. The results are provided in FIGS. 2 to 9.

Each rechargeable lithium battery cells according to Examples 1 to 6 and Comparative Examples 1 and 2 were charged with 2A, 5.25V, and 950mAh.

FIGS. 2 to 9 are graphs respectively showing state of the rechargeable lithium battery cells according to Examples 1 to 6 and Comparative Examples 1 and 2 at overcharge.

Referring to FIGS. 2 to 9, the rechargeable lithium battery cells using a separator coated with a polymer layer including polyvinylidene fluoride based polymer on the surface and an electrolyte solution including alkyl propionate according to Examples 1 to 6 turned out to be more safe at overcharge than the rechargeable lithium battery cell using an electrolyte solution including no alkyl propionate according to Comparative Example 1, and the rechargeable lithium battery cell using a separator that is not coated with a polymer layer including polyvinylidene fluoride based polymer on the surface according to Comparative Example 2.

### Evaluation 2: Safety of Rechargeable lithium battery cell at overcharge

The rechargeable lithium battery cells of 3.8V that were charged to exist in a shipping state according to Examples 1 to 6 were overcharged with 700 mA and 5.25V for 10 hours, and the rechargeable lithium battery cells that were charged to exist in a full charged state according to Comparative Examples 1 and 2 were overcharged with 2A and 5.25V for 230 min. They were examined regarding state and appearance to evaluate safety at overcharge. The results are provided in the following Table 1.

The safety at overcharge was evaluated according to the following criteria.
L1: Ignition, L5: Rupture, L10: Good

**[Table 1]**

| | Mixed composition of electrolyte solution (volume ratio) | Discharge capacity (mAh) at formation | Safety at overcharge |
|---|---|---|---|
| Example 1 | EC/PC/EP (3/1/6) | 1453.1 | L5 |
| Example 2 | EC/EMC/EP (3/1/6) | 1418.9 | L10 |
| Example 3 | EC/DEC/EP (3/1/6) | 1466.4 | L10 |
| Example 4 | EC/PC/EMC/EP (3/1/1/5) | 1471.9 | L5 |
| Example 5 | EC/EMC/DEC/EP (3/1/1/5) | 1440.5 | L10 |
| Example 6 | EC/PC/DEC/EP (3/1/1/5) | 1475.9 | L5 |
| Comparative Example 1 | EC/EMC/DEC (3/5/2) | 1402 | L1 |
| Comparative Example 2 | EC/PC/EP (3/1/6) | 1410.4 | L1 |

Referring to Table 1, the rechargeable lithium battery cells using a separator including a polymer layer including polyvinylidene fluoride based polymer on the surface and an electrolyte solution including alkyl propionate according to Examples 1 to 6 turned out to be safer at overcharge than the rechargeable lithium battery cell using an electrolyte solution including no alkyl propionate according to Comparative Example 1, and the rechargeable lithium battery cell using a separator that is not coated with a polymer layer including polyvinylidene fluoride based polymer on the surface according to Comparative Example 2.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### <Description of symbols>

- 100:: rechargeable lithium battery
- 10:: electrode assembly
- 20:: pouch case
- 13:: electrode tab

## Claims

1. A rechargeable lithium battery comprising a positive electrode, a negative electrode, a separator that is coated on the surface with a polymer layer interposed between the positive electrode and negative electrode, and an electrolyte solution, wherein the polymer layer includes a polyvinylidene fluoride based polymer, wherein the electrolyte solution comprises an alkyl propionate.

2. A battery according to Claim 1, wherein the polymer is selected from the group consisting of polyvinylidene fluoride, polyvinylidene fluoride-hexafluoropropylene copolymer, and a combination thereof.

3. A battery according to Claim 1 or 2, wherein the polyvinylidenefluoride based polymer is loaded at a loading level ranging from 0.5 to 3.0 g/m².

4. A battery according to any one of Claims 1 to 3, wherein the polymer layer further comprises a filler selected from the group consisting of organic powder, ceramic powder and a combination thereof.

5. A battery according to Claim 4, wherein the organic powder comprises polymethylmethacrylate.

6. A battery according to Claim 3 or 4, wherein the ceramic powder comprises at least one selected from Al₂O₃, Mg(OH)₂ and a combination thereof, optionally wherein the ceramic powder is included in an amount of 0.1 to 98 wt% based on the total weight of the polymer layer, further optionally in an amount of 3 to 20 wt% based on the total weight of the polymer layer.

7. A battery according to any one of Claims 1 to 6, wherein the alkyl propionate is a C1 to C10 alkyl propionate.

8. A battery according to Claim 7, wherein the alkyl propionate is methyl propionate, ethyl propionate or a combination thereof.

9. A battery according to any one of Claims 1 to 8, wherein the alkyl propionate forms 10 to 70% volume% based on the total volume of the electrolyte solution, optionally 20 to 70 volume% based on the total volume of the electrolyte solution, further optionally 30 to 70 volume% based on the total volume of the electrolyte solution.

10. A battery according to any one of Claims 1 to 9, wherein the electrolyte solution further comprises a lithium salt and a non-aqueous organic solvent other than an alkyl propionate and, optionally an overcharge-inhibiting additive.

11. A battery according to Claim 10, wherein the non-aqueous organic solvent other than an alkyl propionate comprises one selected from a carbonate-based solvent, an ester-based solvent, an ether-based solvent, a ketone-based solvent, an alcohol-based solvent, an aprotic solvent and a combination thereof.

12. A battery according to Claim 11, wherein the non-aqueous organic solvent other than an alkyl propionate is a carbonate-based solvent selected from dimethyl carbonate, diethyl carbonate, dipropyl carbonate, methylpropyl carbonate, ethylpropyl carbonate, methylethyl carbonate, ethylmethyl carbonate, ethylene carbonate, propylene carbonate, butylene carbonate and a combination thereof.

13. A battery according to Claim 12, wherein the non-aqueous organic solvent other than an alkyl propionate contains ethylene carbonate and either one or more further cyclic carbonates in a ratio between 2:1 and 4:1 or one or more linear carbonates in a ratio between 2:1 and 4:1.

14. A battery according to Claim 12, wherein the non-aqueous organic solvent other than an alkyl propionate contains ethylene carbonate and one or more further cyclic carbonates, and one or more linear carbonates in a ratio between 2:1:1 to 6:1:3 ethylene carbonate: further cyclic carbonate(s): linear carbonate(s), optionally in a ratio of 3:1:1.

15. A battery according to any one of Claims 12 to 14, wherein the alkyl propionate and the non-aqueous organic solvent other than an alkyl propionate are present in a ratio of between 3:1 to 0.5:1, optionally in a ratio of 2:1 to 0.75:1, further optionally in a ratio of 1.5:1 to 1:1.

## Patentansprüche

1. Wiederaufladbare Lithiumbatterie, umfassend eine positive Elektrode, eine negative Elektrode, einen auf der Oberfläche mit einer Polymerschicht beschichteten Separator, der zwischen der positiven Elektrode und der negativen Elektrode eingefügt ist, und eine Elektrolytlösung, wobei die Polymerschicht ein Polymer auf Polyvinylidenfluorid-Basis einschließt, wobei die Elektrolytlösung ein Alkylpropionat umfasst.

2. Batterie nach Anspruch 1, wobei das Polymer aus der Gruppe ausgewählt ist, die aus Polyvinylidenfluorid, Polyvinylidenfluorid-Hexafluorpropylen-Copolymer und einer Kombination daraus besteht.

3. Batterie nach Anspruch 1 oder 2, wobei der Grad der Beladung des Polymers auf Polyvinylidenfluorid-Basis im Bereich von 0,5 bis 3,0 g/m² liegt.

4. Batterie nach einem der Ansprüche 1 bis 3, wobei die Polymerschicht ferner einen Füllstoff umfasst, der aus der Gruppe ausgewählt ist, die aus organischem Pulver, Keramikpulver und einer Kombination daraus besteht.

5. Batterie nach Anspruch 4, wobei das organische Pulver Polymethylmethacrylat umfasst.

6. Batterie nach Anspruch 3 oder 4, wobei das Keramikpulver mindestens eines umfasst, das aus Al₂O₃, Mg(OH)₂ und einer Kombination daraus ausgewählt ist, wobei das Keramikpulver optional in einer Menge von 0,1 bis 98 Gew.-% bezogen auf das Gesamtgewicht der Polymerschicht, ferner optional in einer Menge von 3 bis 20 Gew.-% bezogen auf das Gesamtgewicht der Polymerschicht, enthalten ist.

7. Batterie nach einem der Ansprüche 1 bis 6, wobei das Alkylpropionat ein C₁-C₁₀-Alkylpropionat ist.

8. Batterie nach Anspruch 7, wobei das Alkylpropionat Methylpropionat, Ethylpropionat oder eine Kombination daraus ist.

9. Batterie nach einem der Ansprüche 1 bis 8, wobei das Alkylpropionat 10 bis 70 Vol.-% bezogen auf das Gesamtvolumen der Elektrolytlösung, optional 20 bis 70 Vol.-% bezogen auf das Gesamtvolumen der Elektrolytlösung, ferner optional 30 bis 70 Vol.-% bezogen auf das Gesamtvolumen der Elektrolytlösung bildet.

10. Batterie nach einem der Ansprüche 1 bis 9, wobei die Elektrolytlösung ferner ein Lithiumsalz und ein nichtwässriges organisches Lösungsmittel, das kein Alkylpropionat ist, und optional einen überladungshemmenden Zusatzstoff umfasst.

11. Batterie nach Anspruch 10, wobei das nichtwässrige organische Lösungsmittel, das kein Alkylpropionat ist, eines umfasst, das aus einem Lösungsmittel auf Carbonatbasis, einem Lösungsmittel auf Esterbasis, einem Lösungsmittel auf Etherbasis, einem Lösungsmittel auf Ketonbasis, einem Lösungsmittel auf Alkoholbasis, einem protonenfreien Lösungsmittel und einer Kombination daraus ausgewählt ist.

12. Batterie nach Anspruch 11, wobei das nichtwässrige organische Lösungsmittel, das kein Alkylpropionat ist, ein Lösungsmittel auf Carbonatbasis ist, das aus Dimethylcarbonat, Diethylcarbonat, Dipropylcarbonat, Methylpropylcarbonat, Ethylpropylcarbonat, Methylethylcarbonat, Ethylmethylcarbonat, Ethylencarbonat, Propylencarbonat, Butylencarbonat und einer Kombination daraus ausgewählt ist.

13. Batterie nach Anspruch 12, wobei das nichtwässrige organische Lösungsmittel, das kein Alkylpropionat ist, Ethylencarbonat und entweder ein oder mehrere weitere cyclische Carbonate in einem Verhältnis zwischen 2:1 und 4:1 oder ein oder mehrere lineare Carbonate in einem Verhältnis zwischen 2:1 und 4:1 enthält.

14. Batterie nach Anspruch 12, wobei das nichtwässrige organische Lösungsmittel, das kein Alkylpropionat ist, Ethylencarbonat und ein oder mehrere weitere cyclische Carbonate und ein oder mehrere lineare Carbonate in einem Verhältnis zwischen 2:1:1 bis 6:1:3 Ethylencarbonat : weitere/s cyclische/s Carbonat/e : lineare/s Carbonat/e, optional in einem Verhältnis von 3:1:1, enthält.

15. Batterie nach einem der Ansprüche 12 bis 14, wobei das Alkylpropionat und das nichtwässrige organische Lösungsmittel, das kein Alkylpropionat ist, in einem Verhältnis zwischen 3:1 bis 0,5:1, optional in einem Verhältnis von 2:1 bis 0,75:1, ferner optional in einem Verhältnis von 1,5:1 1 bis 1:1 1 vorhanden sind.

## Revendications

1. Batterie au lithium rechargeable comprenant une électrode positive, une électrode négative, un séparateur qui est revêtu à sa surface d'une couche de polymère intercalée entre l'électrode positive et l'électrode négative, et une solution électrolytique, dans laquelle la couche de polymère comprend un polymère à base de fluorure de polyvinylidène, dans laquelle la solution électrolytique comprend un alkylpropionate.

2. Batterie selon la revendication 1, dans laquelle le polymère est choisi dans le groupe constitué par le fluorure de polyvinylidène, le copolymère de fluorure de polyvinylidène - hexafluoropropylène, et une combinaison de ceux-ci.

3. Batterie selon la revendication 1 ou 2, dans laquelle le polymère à base de fluorure de polyvinylidène est chargé à un taux de chargement allant de 0,5 à 3,0 g/m².

4. Batterie selon l'une quelconque des revendications 1 à 3, dans laquelle la couche de polymère comprend en outre un agent de charge choisi dans le groupe constitué par la poudre organique, la poudre céramique et une combinaison de celles-ci.

5. Batterie selon la revendication 4, dans laquelle la poudre organique comprend du polyméthacrylate de méthyle.

6. Batterie selon la revendication 3 ou 4, dans laquelle la poudre céramique comprend au moins un élément choisi parmi Al₂O₃, Mg(OH)₂ et une combinaison de ceux-ci, la poudre céramique étant éventuellement incluse en une quantité de 0,1 à 98 % en poids par rapport au poids total de la couche de polymère, éventuellement en outre en une quantité de 3 à 20 % en poids par rapport au poids total de la couche de polymère.

7. Batterie selon l'une quelconque des revendications 1 à 6, dans laquelle l'alkylpropionate est un alkylpropionate en C₁ à C₁₀.

8. Batterie selon la revendication 7, dans laquelle l'alkylpropionate est le méthylpropionate, l'éthyl-propionate ou une combinaison de ceux-ci.

9. Batterie selon l'une quelconque des revendications 1 à 8, dans laquelle l'alkylpropionate constitue 10 à 70 % en volume par rapport au volume total de la solution électrolytique, éventuellement 20 à 70 % en volume par rapport au volume total de la solution électrolytique, éventuellement en outre 30 à 70 % en volume par rapport au volume total de la solution électrolytique.

10. Batterie selon l'une quelconque des revendications 1 à 9, dans laquelle la solution électrolytique comprend en outre un sel de lithium et un solvant organique non aqueux différent d'un alkylpropionate et, éventuellement, un additif inhibant les surcharges.

11. Batterie selon la revendication 10, dans laquelle le solvant organique non aqueux différent d'un alkylpropionate comprend un solvant choisi parmi un solvant à base de carbonate, un solvant à base d'ester, un solvant à base d'éther, un solvant à base de cétone, un solvant à base d'alcool, un solvant aprotique et une combinaison de ceux-ci.

12. Batterie selon la revendication 11, dans laquelle le solvant organique non aqueux différent d'un alkylpropionate est un solvant à base de carbonate choisi parmi le diméthylcarbonate, le diéthylcarbonate, le dipropylcarbonate, le méthylpropylcarbonate, l'éthylpropyl-carbonate, le méthyléthylcarbonate, l'éthylméthylcarbonate, l'éthylène carbonate, le propylène carbonate, le butylène carbonate et une combinaison de ceux-ci.

13. Batterie selon la revendication 12, dans laquelle le solvant organique non aqueux différent d'un alkylpropionate contient de l'éthylène carbonate et soit un ou plusieurs autres carbonates cycliques en un rapport situé entre 2/1 et 4/1 soit un ou plusieurs carbonates linéaires en un rapport situé entre 2/1 et 4/1.

14. Batterie selon la revendication 12, dans laquelle le solvant organique non aqueux différent d'un alkylpropionate contient de l'éthylène carbonate et un ou plusieurs autres carbonates cycliques, et un ou plusieurs carbonates linéaires en un rapport situé entre 2/1/1 et 6/1/3 d'éthylène carbonate / autre(s) carbonate(s) cyclique(s) / carbonate(s) linéaire(s), éventuellement en un rapport de 3/1/1.

15. Batterie selon l'une quelconque des revendications 12 à 14, dans laquelle l'alkylpropionate et le solvant organique non aqueux autre qu'un alkylpropionate sont présents en un rapport situé entre 3/1 et 0,5/1, éventuellement en un rapport de 2/1 à 0,75/1, en outre éventuellement en un rapport de 1,5/1 à 1/1.
